# EUROPÄISCHE PATENTANMELDUNG

(11) **EP 1 298 769 A2**
(43) Veröffentlichungstag der Anmeldung: **02.04.2003**
(21) Anmeldenummer: 02015817.6
(22) Anmeldetag: 16.07.2002
(51) Int. Cl.: H02G 3/04, H02G 3/06

(54) **Formteil für Leitungsführungskanäle**

(30) Priorität: 28.09.2001 DE 20116055 U
(71) Anmelder: Tehalit GmbH & Co. KG, 67716 Heltersberg (DE)
(72) Erfinder: Ostertag, Christian, 67240 Bischwiller (FR); Warter, Jean-Luc, 67500 Haguenau (FR); Arnold, Hans-Joachim, 67706 Krickenbach (DE)
(74) Vertreter: Patentanwälte Möll und Bitterich

(57) **Zusammenfassung**

Gegenstand der Erfindung sind Formteile mit Deckfläche (1), Seitenflächen (2) und Höhenausgleichselementen (4) zur Verwendung mit Leitungsführungskanälen. Die Höhenausgleichselemente (4) besitzen angeformte Verbindungsleisten (5). In die Seitenwände (2) sind Verbindungsnuten (6) eingeformt, die mit den Verbindungsleisten (5) kooperieren. Die Verbindungsleisten und -nuten (5, 6) besitzen einen formschlüssigen, z. B. trapezförmigen, z. B. zur Innenseite des Formteils hin offenen Querschnitt. Die Formteile haben die Aufgabe, Stöße und Schnittkanten an den Leitungsführungskanälen zu kaschieren.

## Beschreibung

Die Erfindung betrifft Formteile für Leitungsführungskanäle gemäß dem Oberbegriff des Anspruchs 1.

Leitungsführungskanäle der hier relevanten Art umfassen im wesentlichen ein meist trogförmiges Unterteil, welches die Leitungen aufnimmt, und wenigstens einen auf das Unterteil lösbar aufsetzbaren Deckel. Während die Verlegung der Leitungsführungskanäle in gerader Linie unproblematisch ist, entstehen beim Verlegen um Ecken, d. h. Außenecken, Innenecken, Flachecken, sowie bei T- und kreuzförmigen Abzweigungen unschöne Stöße und Schnittkanten. Aus diesem Grunde gibt es zu allen Leitungsführungskanälen passende Formstücke in Form von Innenecken, Außenecken, Flachwinkeln, Endplatten sowie T- und Kreuzstücken. Für eine nachträgliche Installation von Leitungen müssen die Formstücke sowie der Deckel jederzeit wieder lösbar sein. Die Befestigung der Formstücke erfolgt daher mittels Steck-, Rast- oder Schnappverschlüssen.

Leitungsführungskanäle werden mit unterschiedlichen Querschnitten angeboten, beispielsweise mit gleicher Höhe und unterschiedlichen Breiten oder mit gleicher Breite und unterschiedlichen Höhen. Da die Formteile exakt passen müssen, um ihre Abdeckfunktion erfüllen zu können, muss für jeden Kanal ein eigener Satz von Formteilen produziert, gelagert, bestellt, verschickt und montiert werden. Die Erfahrung zeigt, dass gerade bei der Bestellung oftmals Fehler gemacht werden. Liegen dann auf der Baustelle die falschen, nicht passenden Formteile vor, kann der Montagevorgang nicht beendet werden. Diese Situation ist unbefriedigend, sowohl für den Installateur als auch für den Kanalhersteller.

Der vorliegenden Erfindung liegt daher die Aufgabe zugrunde, hier Abhilfe zu schaffen und Formteile anzugeben, die der Installateur problemlos an die jeweilige Kanalhöhe anpassen kann.

Diese Aufgabe wird gelöst durch Formteile mit den Merkmalen des Anspruchs 1.

Die Vorteile dieser Lösung sind augenfällig. Die Formteile und die Höhenausgleichselemente besitzen exakte Kanten und Maße, so dass unschöne Schnittkanten, wie sie der Installateur mit Messer oder Säge produzieren würde, völlig entfallen. Dadurch, dass die Verbindungsnuten, in die die Höhenausgleichselemente eingesteckt werden, in die Seitenwände eingeformt sind, entfallen auch jegliche Materialanhäufungen. Schließlich können nicht benötigte Höhenausgleichselemente problemlos recycelt werden. Die Zahl der Einzelteile und die Zahl der Bestellungen wird reduziert, gleichzeitig jedoch die Zahl der möglichen Anwendungsfälle erhöht.

Gemäß einer Ausgestaltung der Erfindung besitzen die Verbindungsleisten und -nuten einen formschlüssigen, zum Beispiel trapezförmigen Querschnitt, der zur Innenseite des Formteils hin vorzugsweise offen ist. Eine derartige Querschnittsform lässt sich einfach fertigen und erfüllt die notwendigen Funktionen optimal.

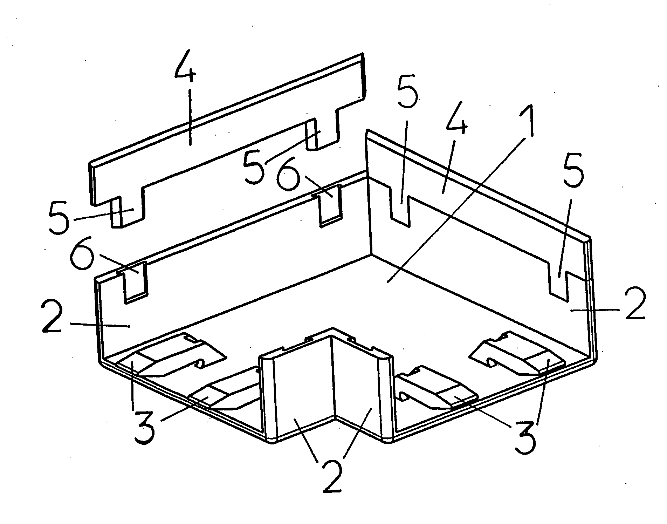

Anhand der Zeichnung soll die Erfindung in Form eines Ausführungsbeispiels näher erläutert werden.

Die Figur zeigt in isometrischer Darstellung ein auf dem Kopf liegendes Flacheck. Dieses umfasst eine Deckfläche 1, daran angeformte Seitenflächen 2 und Halteelemente 3 zur lösbaren Befestigung an einem Leitungsführungskanal bzw. dessen Deckel (nicht dargestellt). In die Seitenwände 2 sind Verbindungsnuten 6 mit formschlüssigem, hier trapezförmigem Querschnitt eingeformt. Die Nuten 6 sind zur Formteilinnenseite hin offen, wenn die Seitenwände 2 sehr dünn sind.

Zur Anpassung an Kanäle unterschiedlicher Höhe sind Höhenausgleichselemente 4 vorgesehen, deren Abmessungen denen der Seitenwände 2 entsprechen. Die Höhenausgleichselemente 4 besitzen angeformte Verbindungsleisten 5, die mit den Verbindungsnuten 6 korrespondieren.

Sind die Höhenausgleichselemente 4 wie in der Zeichnung rechts dargestellt aufgesteckt, so bleiben die Abmessungen des Formteils völlig unverändert. Von der Sichtseite her ist lediglich eine feine und exakt gerade Linie zu sehen, die dem Betrachter nicht auffällt.

## Patentansprüche

1. Formteil für Leitungsführungskanäle, umfassend
- eine Deckfläche (1),
- Seitenflächen (2),
- Halteelemente (3) zur lösbaren Befestigung am Leitungsführungskanal
- und Höhenausgleichselemente (4),
**gekennzeichnet durch** die Merkmale:
- die Höhenausgleichselemente (4) besitzen angeformte Verbindungsleisten (5),
- in die Seitenwände (2) sind Verbindungsnuten (6) eingeformt,
- die Verbindungsleisten (5) korrespondieren mit den Verbindungsnuten (6).

2. Formteil nach Anspruch 1, **gekennzeichnet durch** das Merkmal:
- die Verbindungsleisten und -nuten (5, 6) besitzen einen formschlüssigen, zum Beispiel trapezförmigen Querschnitt.

3. Formteil nach Anspruch 1 oder 2, **gekennzeichnet durch** das Merkmal:
- die Verbindungsnuten (6) sind zur Innenseite des Formteils hin offen.
